# EUROPÄISCHE PATENTSCHRIFT

(11) **EP 2 303 898 B1**
(45) Veröffentlichungstag und Bekanntmachung des Hinweises auf die Patenterteilung: **07.05.2014**
(21) Anmeldenummer: 09776815.4
(22) Anmeldetag: 24.06.2009
(51) Int. Cl.: C07F 9/30, C07F 9/34, C07F 9/38, C07F 9/42, C07F 9/535

(54) **VERFAHREN ZUR HERSTELLUNG VON BIS(FLUORALKYL)PHOSPHINSÄURECHLORIDEN ODER FLUORALKYLPHOSPHONSÄUREDICHLORIDEN**
METHOD FOR PRODUCING BIS(FLUORALKYL)PHOSPHINIC ACID CHLORIDES OR FLUORALKYL PHOSPHONIC ACID CHLORIDES
PROCÉDÉ DE PRODUCTION DE CHLORURES D ACIDE BIS(FLUOROALKYL)PHOSPHONIQUE OU DE DICHLORURES D ACIDE FLUOROALKYLPHOSPHONIQUE

(30) Priorität: 25.07.2008 EP 08013397
(43) Veröffentlichungstag der Anmeldung: 06.04.2011
(73) Patentinhaber: Merck Patent GmbH, 64293 Darmstadt (DE)
(72) Erfinder: IGNATYEV, Nikolai (Mykola), 47058 Duisburg (DE); AUST, Emil Ferdinand, 55130 Mainz (DE); BEJAN, Dana, 42119 Wuppertal (DE); WILLNER, Helge, 45481 Muelheim/Ruhr (DE)
(86) Internationale Anmeldenummer: PCT/EP2009/004535
(87) Internationale Veröffentlichungsnummer: WO 2010/009791

(56) Entgegenhaltungen:
- LINDNER J., STRECKER M.: "Untersuchungen über Naphtyl-halogenphosphine und -phosphinsäuren" MONATSHEFTE FÜR CHEMIE, Bd. 53/54, 1929, Seiten 274-281, XP009122218
- LINDNER; WIRTH; ZAUNBAUER: "Über aromatische Halogenphosphine und ihre Eignung zur massanalytischen Wasserbestimmung" MONATSHEFTE FÜR CHEMIE, Bd. 70, 1937, Seiten 1-19, XP009122454

## Beschreibung

Die Erfindung betrifft ein Verfahren zur Herstellung von Bis(fluoralkyl)phosphinsäurechloriden oder Fluoralkylphosphonsäuredichloriden durch Umsetzung der entsprechenden Bis(fluoralkyl)phosphinsäure oder Fluoralkylphosphonsäure mit Aryltetrachlorphosphoran als Chlorierungsmittel.

Verfahren zur Synthese von Phosphinsäurechloriden und Phosphonsäuredichloriden durch Umsetzung von Phosphinsäuren oder Phosphonsäuren mit den Chlorierungsmitteln PCl₅ oder SOCl₂ sind beispielsweise bekannt aus L.D. Quin, "A Guide to organophosphorus Chemistry", Wiley-Interscience, N.Y., 2000 oder D.E.C. Corbridge, "Phosphorus. An Outlline of ist Chemistry, Biochemistry and Technology (Second Edition)", Elsevier, Amsterdam-Oxford-N.Y., 1980. Diese Methoden wurden bevorzugt für die Synthese von nicht-fluorierten Phosphinsäurechloriden und nicht-fluorierten Phosphonsäuredichloriden verwendet.

L.M. Yagupolskii, N.V. Pavlenko, N.V. Ignat'ev, G.I. Matuschecheva , V.Ya. Semenii, Zh. Obsh. Khim. (Russ.), 54 (1934), 2, 334-339 beschreiben eine Chlorierung einer Bis(perfluoralkyl)phosphinsäure mit PCl₅, wobei jedoch das erhaltene Bis(perfluoralkyl)phosphinsäurechlorid und POCl₃ ähnliche Siedepunkte haben und die Aufarbeitung daher aufwendig ist.

Alternativ kann die Synthese von Bis(perfluoralkyl)phosphinsäurechloriden auch durch Oxidation von Bis(perfluoralkyl)chlorphosphinen mit NO₂ erfolgen, wie beispielsweise bekannt aus J.E. Griffith, Spectrochim. Acta, Part A, 24A (1968), 303 oder T. Mahmood, J.M. Shreeve, Inorg. Chem., 25 (1986), 3128-3131.

Bis(fluoralkyl)phosphinsäurechloride und Fluoralkylphosphonsäuredichloride sind interessante Precursoren für die Synthese von neuen Materialien, beispielsweise von ionischen Flüssigkeiten. Es ist daher wünschenswert eine wirtschaftlich und großtechnisch umsetzbare Synthese dieser Verbindungen zur Verfügung zu haben, damit diese Precursoren in großen Mengen hergestellt werden können.

Aufgabe der Erfindung ist daher ein verbessertes Verfahren zur Herstellung von Bis(fluoralkyl)phosphinsäurechloriden oder Fluoralkylphosphonsäuredichloriden zu entwickeln, das diesen Anforderungen gerecht wird.

Überraschenderweise wurde gefunden, dass der Einsatz von Aryltetrachlorphosphoran als Chlorierungsmittel für die Umsetzung mit Bis(fluoralkyl)phosphinsäure oder Fluoralkylphosphonsäure diese Aufgabe erfüllt.

Der Gegenstand der Erfindung ist daher ein Verfahren zur Herstellung von Bis(fluoralkyl)phosphinsäurechloriden oder Fluoralkylphosphonsäuredichloriden durch Umsetzung der entsprechenden Bis(fluoralkyl)phosphinsäure oder Fluoralkylphosphonsäure mit Aryltetrachlorphosphoran als Chlorierungsmittel.

Die Ausgangsverbindungen Bis(fluoralkyl)phosphinsäure oder Fluoralkylphosphonsäure sind leicht zugänglich, ausgehend von den kommerziell erhältlichen Tris(fluoralkyl)difluorphosporanen, wie beispielsweise in WO 03/087110 und WO 03/087111 beschrieben.

Unter den Aryltetrachlorphosphoranen, ArPCl₄, ist beispielsweise Phenyltetrachlorphosphoran ein bekanntes Reagenz, welches ausgehend von kommerziell erhältlichem Dichlorphenylphosphin (PhPCl₂) durch Umsetzung mit Chlor hergestellt werden kann (A. Michaelis, Justus Liebigs Ann. Chem., 181 (1876), 322).

Die Abkürzung Ar bei der Formel ArPCl₄ steht beispielsweise für substituiertes oder unsubstituiertes Phenyl, Naphthyl oder Anthryl. Besonders bevorzugt steht Ar für unsubstituiertes oder substituiertes Phenyl.

Substituiertes Phenyl bedeutet durch C₁- bis C₁₂-Alkyl, teilweise fluoriertes oder perfluoriertes C₁- bis C₆-Alkyl oder C₃- bis C₇-Cycloalkyl, NO₂, F, Cl, Br, nicht, teilweise oder perfluoriertes C₁-C₆-Alkoxy oder PCl₄ substituiertes Phenyl, beispielsweise, o-, m- oder p-Methylphenyl, o-, m- oder p-Ethylphenyl, o-, m- oder p-Propylphenyl, o-, m- oder p-Isopropylphenyl, o-, m- oder p-Isobutylphenyl, m- oder p-tert.-Butylphenyl, m- oder p-Nitrophenyl, p-Methoxyphenyl, p-Ethoxyphenyl, m- oder p-(Trifluormethyl)phenyl, m- oder p-(Trifluormethoxy)phenyl, o-, m- oder p-Fluorphenyl, o-, m- oder p-Chlorphenyl, o-, m- oder p-Bromphenyl, weiter bevorzugt 2,3-, 2,4-, 2,5-, 2,6-, 3,4- oder 3,5-Dimethylphenyl, 2,3-, 2,4-, 2,5-, 2,6-, 3,4- oder 3,5-Difluorphenyl, 2,3-, 2,4-, 2,5-, 2,6-, 3,4- oder 3,5-Dichlorphenyl, 2,3-, 2,4-, 2,5-, 2,6-, 3,4- oder 3,5-Dibromphenyl, 2,3-, 2,4-, 2,5-, 2,6-, 3,4- oder 3,5-Dimethoxyphenyl, 5-Fluor-2-methylphenyl, 3,4,5-Trimethoxyphenyl, 2,4,5-Trimethylphenyl oder 2,4,6-Trimethylphenyl. Ganz besonders bevorzugt ist Ar unsubstituiertes Phenyl.

Bevorzugt wird Aryltetrachlorphosphoran ausgewählt aus Phenyltetrachlorphosphoran, Tolyltetrachlorphosphoran oder p-Chlorphenyltetrachlorphosphoran. Insbesondere wird Phenyltetrachlorphosphoran verwendet.

Geradkettige oder verzweigte Alkylgruppen mit 1 bis 6 C-Atomen sind beispielsweise Methyl, Ethyl, Isopropyl, Propyl, Butyl, sek.-Butyl oder tert.-Butyl, Pentyl, 1-, 2- oder 3-Methylbutyl, 1,1-, 1,2- oder 2,2-Dimethylpropyl, 1-Ethylpropyl oder Hexyl oder für geradkettige oder verzweigte Alkylgruppen mit 1 bis 12 C-Atomen beispielsweise erweitert durch Octyl oder Dodecyl.

Nicht fluoriertes C₁-C₆ Alkoxy entspricht einer Alkoxygruppe der Formel OCₚH₂ₚ₊₁ mit p = 1, 2, 3, 4, 5 oder 6, beispielsweise Methoxy, Ethoxy, Propoxy, Butoxy, Pentoxy oder Hexoxy, wobei die Alkylgruppen der Alkoxygruppen geradkettig oder verzweigt sein können. Bei perfluorierten Alkoxygruppen sind entsprechend alle H-Atome der oben genannten Formel durch F ersetzt. Bei teilweise durch F substituierten Alkoxygruppen sind nur einige H durch F ersetzt.

Unsubstituierte gesättigte oder teilweise oder vollständig ungesättigte Cycloalkylgruppen mit 3-7 C-Atomen sind daher Cyclopropyl, Cyclobutyl, Cyclopentyl, Cyclohexyl, Cycloheptyl oder Phenyl, welche mit C₁- bis C₆-Alkylgruppen oder PCl₄ substituiert sein können.

Die Umsetzung kann in einem organischen Lösungsmittel, beispielsweise in Chloroform, Dichlormethan oder 1,6-Dibromhexan, erfolgen, wobei die Umsetzung jedoch auch ohne Lösungsmittel erfogen kann. Besonders bevorzugt wird die Umsetzung ohne Lösungsmittel durchgeführt.

Vorzugsweise liegt das organische Lösungsmittel getrocknet vor.

Die Umsetzung erfolgt in der Regel mit äquimolaren Mengen, d.h. 1 mol Bis(perfluoralkyl)phosphinsäure und 1 Mol Aryltetrachlorphosphoran oder 1 mol Fluoralkylphosphonsäure und 2 Mol Aryltetrachlorphosphoran. Es it jedoch auch möglich, bis zu einem doppelten Überschuss an Aryltetrachlorphosphoran zu verwenden. Bevorzugt wird mit einem Überschuss von 10% gearbeitet, wie in den Beispielen dokumentiert.

Die Reaktion kann bei Temperaturen von -20° bis 200°C stattfinden, bevorzugt bei Temperaturen von 0° bis 150°C. Besonders bevorzugt findet die Reaktion bei einer Temperatur von 0°C bis Raumtemperatur für die Synthese des Bis(fluoralkyl)phosphinsäurechlorids statt. Besonders bevorzugt findet die Reaktion bei Temperaturen von Raumtemperatur bis 80°C für die Synthese des Fluoralkylphosphonsäuredichlorids statt.

Es kann weiterhin vorteilhaft sein, die Reaktion unter Inertgasbedingungen durchzuführen.

Zur Herstellung von Bis(fluoralkyl)phosphinsäurechloriden ist als Ausgangsstoff für das erfindungsgemäße Verfahren insbesondere eine Verbindung der Formel I geeignet

R¹R²P(=O)OH I,

wobei
R¹ und R² jeweils unabhängig voneinander stehen für geradkettige oder verzweigte Alkylgruppen CₙF_{2n+1-y}H_{y}, wobei
n 1, 2, 3, 4, 5, 6, 7, 8, 9, 10, 11 oder 12 und y 0, 1, 2, 2, 3, 4 oder 5 bedeutet, wobei jedoch für n = 1 oder 2, y 0, 1 oder 2 bedeutet.

Dies führt zu Bis(fluoralkyl)phosphinsäurechloriden der Formel Ia

R¹R²P(=O)Cl Ia,

wobei
R¹ und R² jeweils unabhängig voneinander stehen für geradkettige oder verzweigte Alkylgruppen CₙF_{2n+1-y}H_{y}, wobei
n 1, 2, 3, 4, 5, 6, 7, 8, 9, 10, 11 oder 12 und y 0, 1, 2, 2, 3, 4 oder 5 bedeutet, wobei jedoch für n = 1 oder 2, y 0, 1 oder 2 bedeutet.

Die Substituenten R¹ und R² können gleich oder verschieden sein. Besonders bevorzugt sind die beiden Substituenten R¹ und R² gleich.

In einer besonderen Ausführungsform sind die Substituenten R¹ und R² in Formel I oder la perfluoriert, d.h. R¹ und R² stehen jeweils unabhängig voneinander für eine geradkettige oder verzweigte fluorierte Alkylgruppe CₙF₂ₙ₊₁ mit n = 1, 2, 3, 4, 5, 6, 7, 8, 9, 10, 11 oder 12.

Bevorzugt stehen R¹ und R² in Formel I oder la jeweils unabhängig voneinander für Trifluormethyl, Pentafluorethyl, Heptafluorpropyl oder lineares oder verzweigtes Nonafluorbutyl; ganz besonders bevorzugt für Pentafluorethyl oder lineares Nonafluorbutyl.

Des Weiteren sind zur Herstellung von Bis(fluoralkyl)phosphinsäurechloriden der Formel la als Ausgangsstoff für das erfindungsgemäße Verfahren auch die Salze der Säure R¹R²P(=O)OH der Formel I geeignet, d.h. Salze der Formel [R¹R²P(=O)O⁻]ₘ Kt^{+m}, wobei Kt^{+m} ein anorganisches, vorzugsweise Na⁺, K⁺, Ca⁺², Mg⁺², Zn⁺², oder ein organisches, vorzugsweise Ammonium oder Phosphonium, Kation ist und m = 1 oder 2 bedeutet.

Bevorzugte Ammoniumkationen sind [NH₄]⁺ oder Tetraalkylammonium-Kationen, wobei die Alkylgruppen 1 bis 6 C-Atome haben können und geradkettig oder verzweigt sein können. Vorzugsweise sind die Alkylgruppen gleich.

Bevorzugte Phosphoniumkationen sind Tetraalkylphosphonium-Kationen, wobei die Alkylgruppen 1 bis 6 C-Atome haben können und geradkettig oder verzweigt sein können, Tetraarylphosphonium-Kationen, wobei "aryl" einer der zuvor angegebenen Bedeutungen für Ar entspricht oder Triarylalkylphosphonium-Kationen, wobei "aryl" einer der zuvor angegebenen Bedeutungen enspricht und "alkyl" eine Alkylgruppe mit 1 bis 6 C-Atomen bedeutet, die geradkettig oder verzweigt sein können. Bevorzugt sind die Alkylgruppen oder Arylgruppen in den Tetraalkylphosphonium-Kationen oder Tetraarylphosphonium-Kationen gleich. Bevorzugt sind die Arylgruppen in Trisarylalkylphosphonium-Kationen gleich.

Zur Herstellung von Fluoralkylphosphonsäuredichloriden ist als Ausgangsstoff für das erfindungsgemäße Verfahren insbesondere eine Verbindung der Formel II geeignet

R¹P(=O)(OH)₂ II,

wobei
R¹ steht für eine geradkettige oder verzweigte Alkylgruppe CₙF_{2n+1-y}H_{y}, wobei
n 1, 2, 3, 4, 5, 6, 7, 8, 9, 10, 11 oder 12 und y 0, 1, 2, 2, 3, 4 oder 5 bedeutet, wobei jedoch für n = 1 oder 2, y 0, 1 oder 2 bedeutet.

Dies führt zu Fluoralkylphosphonsäuredichloriden der Formel IIa

R¹P(=O)(Cl)₂ IIa,

wobei
R¹ steht für eine geradkettige oder verzweigte Alkylgruppe CₙF_{2n+1-y}H_{y}, wobei
n 1, 2, 3, 4, 5, 6, 7, 8, 9, 10, 11 oder 12 und y 0, 1, 2, 2, 3, 4 oder 5 bedeutet, wobei jedoch für n = 1 oder 2, y 0, 1 oder 2 bedeutet.

In einer besonderen Ausführungsform ist der Substituent R¹ der Formel II oder IIa perfluoriert, d.h. R¹ steht jeweils unabhängig voneinander für eine geradkettige oder verzweigte flourierte Alkylgruppe CₙF₂ₙ₊₁ mit n = 1, 2, 3, 4, 5, 6, 7, 8, 9, 10, 11 oder 12.

Bevorzugt steht R¹ in Formel II oder IIa für Trifluormethyl, Pentafluorethyl, Heptafluorpropyl oder lineares oder verzweigtes Nonafluorbutyl. Ganz besonders bevorzugt für Pentafluorethyl oder lineares Nonafluorbutyl.

Des Weiteren sind zur Herstellung von Fluoralkylphosphonsäuredichloriden der Formel IIa als Ausgangsstoff für das erfindungsgemäße Verfahren auch die Salze der Säure R¹P(=O)(OH)₂ der Formel II geeignet, d.h. Salze der Formel [R¹P(=O)O₂]²⁻ m Kt⁺, wobei Kt⁺ ein anorganisches, vorzugsweise Na⁺, K⁺, Ca⁺², Mg⁺², Zn⁺², oder ein organisches, vorzugsweise Ammonium oder Phosphonium, Kation ist und m = 1 oder 2 bedeutet, je nach Ladung des verwendeten Kations.

Bevorzugte Ammoniumkationen sind [NH₄]⁺ oder Tetraalkylammonium-Kationen, wobei die Alkylgruppen 1 bis 6 C-Atome haben können und geradkettig oder verzweigt sein können. Vorzugsweise sind die Alkylgruppen gleich.

Bevorzugte Phosphoniumkationen sind Tetraalkylphosphonium-Kationen, wobei die Alkylgruppen 1 bis 6 C-Atome haben können und geradkettig oder verzweigt sein können, Tetraarylphosphonium-Kationen, wobei "aryl" einer der zuvor angegebenen Bedeutungen für Ar entspricht oder Triarylalkylphosphonium-Kationen, wobei "aryl" einer der zuvor angegebenen Bedeutungen enspricht und "alkyl" eine Alkylgruppe mit 1 bis 6 C-Atomen bedeutet, die geradkettig oder verzweigt sein können. Bevorzugt sind die Alkylgruppen oder Arylgruppen in den Tetraalkylphosphonium-Kationen oder Tetraarylphosphonium-Kationen gleich. Bevorzugt sind die Arylgruppen in Trisarylalkylphosphonium-Kationen gleich.

Das erfindungsgemäße Verfahren ermöglicht eine Synthese von Bis(fluoralkyl)phosphinsäurechloriden oder Fluoralkylphosphonsäuredichloriden mit einer Ausbeute, die im Vergleich zum Stand der Technik verbessert ist. Weiterhin ist diese Verfahren für eine großtechnische Synthese geeignet, da die Aufreinigung und Abtrennung von Nebenprodukten, verursacht durch das Aryltetrachlorphosphoran erleichtert wird und nur ein geringer apparativer Aufwand diesbezüglich notwendig ist. Das Nebenprodukt C₆H₅P(O)Cl₂ hat beispielsweise einen Siedepunkt von 258° C bei atmosphärischem Druck gemäß der Literatur Gutmann et. al., Monatsh. Chem., 91, 1960, S. 836-839). Dieser Siedepunkt unterscheidet sich signifikant von denen des Produkts, so dass eine Abtrennung des Nebenprodukts erleichtert wird.

Auch ohne weitere Ausführungen wird davon ausgegangen, dass ein Fachmann die obige Beschreibung im weitesten Umfang nutzen kann. So ermöglicht das erfindungsgemäße Verfahren beispielsweise auch die Herstellung von Perfluoralkylcarbonsäurechloriden aus Perfluoralkylcarbonsäuren mit 2 bis 12 C-Atomen, bevorzugt mit 2 bis 8 C-Atomen oder aus deren Salzen durch Umsetzung mit Aryltetrachlorphosphoran.
Das erfindungsgemäße Verfahren ermöglicht beispielsweise auch die Herstellung von perfluorierten Dicarbonsäuredichloriden aus Dicarbonsäuren mit 3 bis 10 C-Atomen, bevorzugt mit 4 bis 8 C-Atomen, oder aus deren Salzen durch Umsetzung mit Aryltetrachlorphosphoran.

Die bevorzugten Ausführungsformen und Beispiele sind deswegen lediglich als beschreibende, keineswegs als in irgendeiner Weise limitierende Offenbarung aufzufassen.

### Beispiele:

Die NMR-Spektren wurden an Lösungen in deuterierten Lösungsmitteln bei 20°C an einem Bruker Avance 300 Spektrometer mit einem 5 mm Breitbandkopf ¹H/BB mit Deuterium Lock gemessen, falls nicht in den Beispielen angegeben. Die Messfrequenzen der verschiedenen Kerne sind: ¹H: 300,13 MHz, ¹⁹F: 282,41 MHz und ³¹P: 121,49 MHz. Die Methode der Referenzierung wird bei jedem Spektrum bzw. bei jedem Datensatz separat angegeben.

### Beispiel 1:

### a) Synthese von Phenyltetrachlorphosphoran, PhPCl₄ C₆H₅PCl₂ + Cl₂ → C₆H₅PCl₄

30.1 g (0.168 mol) Dichlorphenylphosphin in 130 ml trockenem Chloroform werden vorgelegt und 11.9 g (0.168 mol) Chlorgas wird ca. 20 Minuten zugeführt, wobei die Temperatur auf 30°C gehalten wird. Danach wird das Lösungsmittel entfernt und man erhält 40.7 g eines Feststoffs, identifiziert als Phenyltetrachlorphosphoran.
Schmelzpunkt: 73-74°C (Lit 73°C: J. Lindner, W. Wirth, B. Zaunbauer, Monatsh. Chem., 70 (1937), 1-19)
³¹P NMR (CDCl₃; Standard: 85 % H₃PO₄), δ, ppm: -42.6 m.

### b) Synthese von Bis(pentafluorethyl)phosphinsäurechlorid (C₂F₅)₂P(O)OH + C₆H₅PCl₄ → (C₂F₅)₂P(O)Cl + HCl + C₆H₅P(O)Cl₂

Zu 20.0 g (80 mmol) Phenyltetrachlorphosphoran werden 21.75 g (72 mmol) Bis(pentafluorethyl)phosphinsäure tropfenweise bei Raumtemperatur zugegeben und vier Stunden gerührt. Bis(pentafluorethyl)phosphinsäurechlorid wird durch Destillation bei Atmosphärendruck abegtrennt. Man erhält 18.1 g Bis(pentafluorethyl)phosphinsäurechlorid, das entspricht einer Ausbeute von 78%, bezogen auf die eingesetzte Phosphinsäure.
Siedepunkt: 86-88°C
¹⁹F NMR (Reinsubstanz; CD₃CN-Film; Standard: CCl₃F), δ, ppm: -82.0 s (2CF₃), -120.1 d,d (2F_{A}), -124.4 d,d (2F_{B}), ²*J*_{P,F(A)} = 92 Hz, ²*J*_{P,F(B)} = 100 Hz, ²*J*_{F(A),F(B)} = 323 Hz.
³¹P NMR (Reinsubstanz; CD₃CN-Film; Standard: 85 % H₃PO₄), δ, ppm: 20.8 t,t.

### Beispiel 2: Synthese von Bis(nonafluorbutyl)phosphinsäurechlorid (C₄F₉)₂P(O)OH + C₆H₅PCl₄ → (C₄F₉)₂P(O)Cl + HCl + C₆H₅P(O)Cl₂

### Variante a) Zu einer Lösung von 1.47 g (5.9 mmol)

Phenyltetrachlorphosphoran in 3 cm³ trockenem Chloroform werden 2.49 g (5,0 mmol) Bis(nonafluorbutyl)phosphinsäure bei Raumtemperatur tropfenweise zugegeben und weitere 50 Minuten gerührt. Chloroform wird destillativ abgetrennt und Bis(nonafluorbutyl)phosphinsäurechlorid wird bei Atmosphärendruck abdestilliert. Man erhält 1.62 g Bis(nonafluorbutyl)phosphinsäurechlorid, das entspricht einer Ausbeute von 63% bezogen auf die eingesetzte Phosphinsäure.

### Variante b) Das Gemisch von 4.6 g (18.4 mmol)

### Phenyltetrachlorphosphoran und 7.3 g (14.5 mmol)

Bis(nonafluorbutyl)phosphinsäure wird bei Raumtemperatur für vier Stunden gerührt. Nach der Beendigung der Gasentwicklung (HCl) wird das Nonafluorbutylphosphonsäuredichlorid durch Destillation bei Atmosphärendruck abgetrennt. Man erhält 5.73 g Bis(nonafluorbutyl)phosphinsäurechlorid als farblosen flüssigen Stoff. Das entspricht einer Ausbeute von 76%, bezogen auf die eingesetzte Phosphinsäure.
Siedepunkt: 158-160°C.
¹⁹F NMR (Reinsubstanz; CD₃CN-Film; Standard: CCl₃F), δ, ppm: -84.3 t,m (2CF₃), -115.4 d,d (2F_{A}), -119.7 d,d (2F_{B}), -121.5 m (2CF₂), -128.6 m (2CF₂), ²*J*_{P,F(A)} = 95 Hz, ²*J*_{P,F(B)} = 102 Hz, ²*J*_{F(A),F(B)} = 328 Hz, ⁴*J*_{F,F} = 10 Hz, ⁴*J*_{F,F} = 14 Hz.
³¹P NMR (Reinsubstanz; CD₃CN-Film; Standard: 85 % H₃PO₄), δ, ppm: 21.8 t,t.

### Beispiel 3: Synthese von Pentafluorethylphosphonsäuredichlorid (C₂F₅)P(O)(OH)₂ + 2 C₆H₅PCl₄ → (C₂F₅)P(O)Cl₂ + 2 HCl + 2 C₆H₅P(O)Cl₂

Zu 19.0 g (76 mmol) Phenyltetrachlorphosphoran werden 6.46 g (32 mmol) Pentafluorethylphosphonsäure tropfenweise bei 0° C (Eis-Bad) und guter

Durchmischung zugegeben. Danach wird das Reaktionsgemisch für vier Stunden bei Raumtemperatur gerührt. Pentafluorethylphosphonsäuredichlorid wird durch Destillation bei Atmosphärendruck abgetrennt. Man erhält 4.64 g Pentafluorethylphosphonsäuredichlorid als farblosen flüssigen Stoff. Das entspricht einer Ausbeute von 61 %, bezogen auf die eingesetzte Phosphonsäure.
Siedepunkt: 77-79°C
¹⁹F NMR (Reinsubstanz; CD₃CN-Film; Standard: CCl₃F), δ, ppm: -80.9 s (CF₃), -122.5 d (CF₂), ²*J*_{P,F} = 110 Hz.
³¹P NMR (Reinsubstanz; CD₃CN-Film; Standard: 85 % H₃PO₄), δ, ppm: 17.7 t.

### Beispiel 4: Synthese von Nonafluorbutylphosphonsäuredichlorid (C₄F₉)P(O)(OH)₂ + 2 C₆H₅PCl₄ → (C₄F₉)P(O)Cl₂ + 2 HCl + 2 C₆H₅P(O)Cl₂

Das Gemisch von 11.0 g (44 mmol) Phenyltetrachlorphosphoran und 5.5 g (18.3 mmol) Nonafluorbutylphosphonsäure wird bei 40° C (Badtemperatur) für zwei Stunden gerührt. Nonafluorbutylphosphonsäuredichlorid wird durch Destillation bei Atmosphärendruck abgetrennt. Man erhält 3.77 g Nonafluorbutylphosphonsäuredichlorid als farblosen flüssigen Stoff. Das entspricht einer Ausbeute von 61 %, bezogen auf die eingesetzte Phosphonsäure.
Siedepunkt: 124-126° C
¹⁹F NMR (Reinsubstanz, CD₃CN-Film; Standard: CCl₃F), δ, ppm: -83.8 t,m (CF₃), -118.5 d (CF₂), -121.4 m (CF₂), -128.4 m (CF₂), ²*J*_{P,F} = 113 Hz, ⁴*J*_{F,F} = 10 Hz, ⁴*J*_{F,F} = 14 Hz.
³¹P NMR (Reinsubstanz, CD₃CN-Film; Standard: 85 % H₃PO₄), δ, ppm: 17.8 t.

## Patentansprüche

1. Verfahren zur Herstellung von Bis(fluoralkyl)phosphinsäurechloriden oder Fluoralkylphosphonsäuredichloriden durch Umsetzung der entsprechenden Bis(fluoralkyl)phosphinsäure oder Fluoralkylphosphonsäure mit Aryltetrachlorphosphoran als Chlorierungsmittel.

2. Verfahren nach Anspruch 1, **dadurch gekennzeichnet, dass** als Bis(fluoralkyl)phosphinsäure eine Verbindung der Formel I
R¹R²P(=O)OH I
eingesetzt wird, wobei
R¹ und R² jeweils unabhängig voneinander stehen für geradkettige oder verzweigte Alkylgruppen CₙF_{2n+1-y}H_{y}, wobei
n 1, 2, 3, 4, 5, 6, 7, 8, 9, 10, 11 oder 12 und y 0, 1, 2, 2, 3, 4 oder 5 bedeutet, wobei jedoch für n = 1 oder 2, y 0, 1 oder 2 bedeutet.

3. Verfahren nach Anspruch 1, **dadurch gekennzeichnet, dass** als Fluoralkylphosphonsäure eine Verbindung der Formel II
R¹P(=O)(OH)₂ II
eingesetzt wird, wobei
R¹ steht für eine geradkettige oder verzweigte Alkylgruppe CₙF_{2n+1-y}H_{y}, wobei
n 1, 2, 3, 4, 5, 6, 7, 8, 9, 10, 11 oder 12 und y 0, 1, 2, 2, 3, 4 oder 5 bedeutet, wobei jedoch für n = 1 oder 2, y 0, 1 oder 2 bedeutet.

4. Verfahren nach einem oder mehren der Ansprüche 1 bis 3, **dadurch gekennzeichnet, dass** als Aryltetrachlorphosphoran Phenyltetrachlorphosphoran eingesetzt wird.

5. Verfahren nach einem oder mehreren der Ansprüche 1 bis 4, **dadurch gekennzeichnet, dass** die Reaktion bei Temperaturen zwischen -20°C und 200°C stattfindet.

## Claims

1. Process for the preparation of bis(fluoroalkyl)phosphinic acid chlorides or fluoroalkylphosphonic acid dichlorides by reaction of the corresponding bis(fluoroalkyl)phosphinic acid or fluoroalkylphosphonic acid with aryltetrachlorophosphorane as chlorinating agent.

2. Process according to Claim 1, **characterised in that** the bis(fluoroalkyl)-phosphinic acid employed is a compound of the formula I
R¹R²P(=O)OH I,
where
R¹ and R² each stand, independently of one another, for straight-chain or branched alkyl groups CₙF_{2n+1-y}H_{y}, where
n denotes 1, 2, 3, 4, 5, 6, 7, 8, 9, 10, 11 or 12 and y denotes 0, 1, 2, 3, 4 or 5, but where y denotes 0, 1 or 2 for n = 1 or 2.

3. Process according to Claim 1, **characterised in that** the fluoroalkylphosphonic acid employed is a compound of the formula II
R¹P(=O)(OH)₂ II,
where
R¹ stands for a straight-chain or branched alkyl group CₙF_{2n+1-y}H_{y}, where
n denotes 1, 2, 3, 4, 5, 6, 7, 8, 9, 10, 11 or 12 and y denotes 0, 1, 2, 3, 4 or 5, but where y denotes 0, 1 or 2 for n = 1 or 2.

4. Process according to one or more of Claims 1 to 3, **characterised in that** the aryltetrachlorophosphorane employed is phenyltetrachlorophosphorane.

5. Process according to one or more of Claims 1 to 4, **characterised in that** the reaction is carried out at temperatures between -20°C and 200°C.

## Revendications

1. Procédé de préparation de chlorures d'acide bis(fluoroalkyl)phosphinique ou de dichlorures d'acide fluoroalkylphosphonique, par la réaction de l'acide bis(fluoroalkyl)phosphinique ou de l'acide fluoroalkylphosphonique correspondant avec de l'aryltétrachlorophosphorane comme agent de chloration.

2. Procédé selon la revendication 1, **caractérisé en ce que** l'acide bis-(fluoroalkyl)phosphinique employé est un composé de formule I
R¹R²P(=O)OH I,
dans laquelle
R¹ et R² représentent chacun, indépendamment l'un de l'autre, des groupements alkyle à chaîne linéaire ou ramifiée CₙF_{2n+1-y}H_{y}, où
n désigne 1, 2, 3, 4, 5, 6, 7, 8, 9, 10, 11 ou 12 et y désigne 0, 1, 2, 3, 4 ou 5, mais où y désigne 0, 1 ou 2 pour n = 1 ou 2.

3. Procédé selon la revendication 1, **caractérisé en ce que** l'acide fluoroalkylphosphonique employé est un composé de formule II
R¹P(=O)(OH)₂ II,
dans laquelle
R¹ représente un groupement alkyle à chaîne linéaire ou ramifiée CₙF_{2n+1-y}H_{y}, où
n désigne 1, 2, 3, 4, 5, 6, 7, 8, 9, 10, 11 ou 12 et y désigne 0, 1, 2, 3, 4 ou 5, mais où y désigne 0, 1 ou 2 pour n = 1 ou 2.

4. Procédé selon l'une ou plusieurs parmi les revendications 1 à 3, **caractérisé en ce que** l'aryltétrachlorophosphorane employé est le phényltétrachlorophosphorane.

5. Procédé selon l'une ou plusieurs parmi les revendications 1 à 4, **caractérisé en ce que** la réaction est effectuée à des températures comprises entre -20°C et 200°C.
